# EUROPEAN PATENT SPECIFICATION

(11) **EP 3 298 072 B1**
(45) Date of publication and mention of the grant of the patent: **25.06.2025**
(21) Application number: 16738234.0
(22) Date of filing: 13.05.2016
(51) Int. Cl.: C08K 3/36, C09J 7/20, C09J 7/38, C09J 133/00, C08L 23/28, C09J 11/04, B32B 7/12, B32B 5/00, B32B 27/00, C08K 7/04, C09J 133/06, C09J 133/08, B60R 19/18, C08K 7/24

(54) **PRESSURE SENSITIVE ADHESIVE ARTICLE AND METHOD OF REINFORCING A VEHICULAR MEMBER**
DRUCKEMPFINDLICHER KLEBEARTIKEL UND VERFAHREN ZUR VERSTÄRKUNG EINES FAHRZEUGELEMENTS
ARTICLE ADHÉSIF SENSIBLE À LA PRESSION ET PROCÉDÉ DE RENFORCEMENT D'UN ÉLÉMENT DE VÉHICULE

(30) Priority: 18.05.2015 JP 2015101138
(43) Date of publication of application: 28.03.2018
(73) Proprietor: 3M Innovative Properties Company, St. Paul, MN 55133-3427 (US)
(72) Inventor: WAKAMATSU, Kenji, Shinagawa-ku Tokyo 141-8684 (JP); TAKEUCHI, Tsuneharu, Shinagawa-ku Tokyo 141-8684 (JP)
(74) Representative: Mathys & Squire
(86) International application number: PCT/US2016/032362
(87) International publication number: WO 2016/187009

(56) References cited:
- EP-A1- 0 397 554
- EP-A1- 2 298 844
- JP-A- 2011 043 525
- US-A- 5 151 318
- US-A1- 2010 035 494

## Description

### FIELD OF THE INVENTION

The present invention relates to a pressure sensitive adhesive article, in particular to such an article that contains a pressure sensitive adhesive polymer with inorganic fine particles and a fibrous sheet in the pressure sensitive adhesive polymer. The present invention also relates to a method of reinforcing a vehicular member with the pressure sensitive adhesive article.

### BACKGROUND

In recent years, thinning for the purpose of reducing weight is required for vehicle exterior members (for example, bumpers) and interior members that are formed by injection molding. On the other hand, strength is also necessary for vehicular members, and therefore it is important to achieve thinning and ensure strength. However, with injection molding, if insufficient strength in a vehicular member is detected after mold design or molding, the mold itself must be corrected, and this takes labor and time.

On the other hand, to strengthen the bumper, a bumper reinforcing structure that uses an energy absorbing material made from a synthetic polymer foam is known (for example, refer to Japanese Unexamined Patent Application H08-164805). US5151318A discloses a self-adhesive reinforcing material suitable for use as a self-adhesive reinforcement for a sheet metal. Such reinforcements are lightweight and therefore very suitable for car and aircraft industries.

### SUMMARY OF THE INVENTION

A bumper reinforcing structure using a synthetic polymer foam energy absorbing material may be configured such that a bumper that is merely an exterior part and a reinforcement member installed on a vehicle interior side reduces deformation of the bumper by mutually interfering through an energy absorbing material, but there are design restrictions such as the structure and placement of both members, and simple reinforcement may not be possible. Therefore, a method that enables convenient reinforcement of a vehicular member itself is desired.

In one embodiment, the present invention provides a pressure sensitive adhesive article, comprising: a pressure sensitive adhesive layer containing a pressure sensitive acrylic polymer, a chlorinated polyolefin and inorganic fine particles; and a fibrous sheet formed by a plurality of mutually intersected fibers that are arranged in the pressure sensitive adhesive layer.

In another embodiment, the present invention provides a method of using a pressure sensitive adhesive article, including: a step of adhering a pressure sensitive article to a vehicle member to reinforce the vehicle member; wherein the pressure sensitive adhesive articles contains: a pressure sensitive acrylic polymer, a chlorinated polyolefin and inorganic fine particles; and a fibrous sheet formed by a plurality of mutually intersected fibers that are arranged in the pressure sensitive adhesive layer.

The present invention can provide a pressure sensitive adhesive article and method that can conveniently reinforce an adherend such as a vehicular member or the like. Furthermore, the pressure sensitive adhesive article can have excellent heat resistance, and therefore, favorable adhesion can be exhibited, even if the vehicular member which is an adherend reaches high temperatures due to vehicle operation for example.

### BRIEF DESCRIPTION OF THE DRAWINGS

FIG. 1 is a perspective view illustrating an embodiment of a pressure sensitive adhesive article;
FIG. 2 is a cross-sectional view of the pressure sensitive adhesive article of FIG. 1;
FIG. 3 is a cross-sectional view illustrating another embodiment of the pressure sensitive adhesive article;
FIG. 4 is a schematic view for describing a rigidity evaluation test in the examples;
FIG. 5 is a graph showing the results of the rigidity evaluation test in the example; and
FIG. 6 is a graph showing the results of a heat resistance evaluation test in the example.

### DESCRIPTION OF THE PREFERRED EMBODIMENTS

An embodiment of the present invention is described in detail below while referring to the drawings.

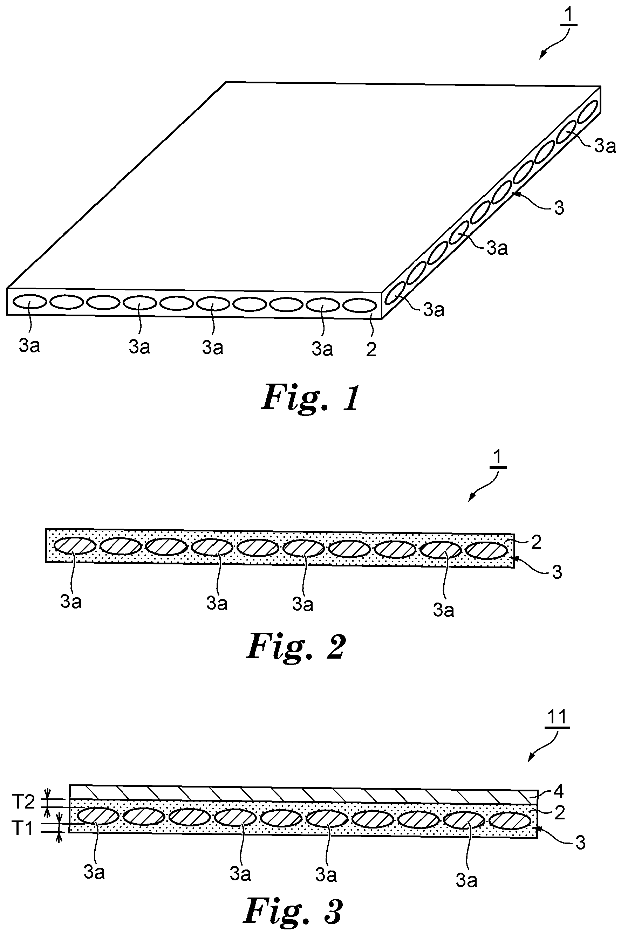

FIG. 1 is a perspective view illustrating an embodiment of a pressure sensitive adhesive article. FIG. 2 is a cross-sectional view of the pressure sensitive adhesive article of FIG. 1. As illustrated in FIG. 1 and 2, the pressure sensitive adhesive article 1 contains a pressure sensitive adhesive layer 2 and a fibrous sheet 3 arranged in the pressure sensitive adhesive layer 2.

The pressure sensitive adhesive layer 2 contains a pressure sensitive adhesive acrylic polymer from the perspective of excellent heat resistance. Herein, "pressure sensitive adhesive" means that the storage elastic modulus (G') measured at 10 radians/sec at an applicable temperature (preferably measured at 20°C to 22°C) is less than 3 x 10⁵ Pascals (Dahlquist standard). Furthermore, "polymer" conforms to the definition of "polymer" according to the International Union of Pure and Applied Chemistry (IUPAC) Polymer Nomenclature Committee
(http://main.spsj.or.jp/c19/iupac/Recommendations/glossary36.html).

The pressure sensitive adhesive acrylic polymer may be a polymer that is obtained by polymerizing a first monomer containing at least one type of (meth)acrylate ester of a nontertiary alcohol with 4 to 20 carbon atoms in the alkyl group with a second monomer that can copolymerize with the first monomer, for example. However, the second monomer is a different monomer from the first monomer. Herein, "(meth)acrylic" refers to acrylic or methacrylic (also called methyl acrylic), and similar compounds also have the same meaning.

The first monomer may be a monomer that provides a polymer with a glass transition temperature that is less than 0°C when homopolymerized. Herein, the glass transition temperature refers to the temperature at peak position of Tanδ during a dynamic viscoelasticity measurement (frequency of 1.0 Hz and temperature increase rate of 5°C/min are preferable) (same hereinafter). The first monomer may be a monofunctional (meth)acrylate ester of a nontertiary alkyl alcohol preferably having 4 to 20 carbon atoms in the alkyl group, and more preferably 4 to 18. Preferable examples of the first monomer include n-butyl acrylate, n-hexyl acrylate, n-octyl acrylate, isooctyl acrylate, 2-ethyl hexyl acrylate, isononyl acrylate, n-decyl acrylate, n-dodecyl acrylate, octadecyl acrylate, and mixtures thereof.

The second monomer may be a monomer that provides a polymer with a glass transition temperature exceeding 0°C when homopolymerized. Preferable examples of the second monomer include (meth)acrylic acid, N-vinyl pyrrolidone, N-vinyl caprolactam, N,N-dimethyl acrylamide, and other substituted (meth)acrylamides, acrylonitrile, isobornyl acrylate, acrylates of an alcohol with 1 to 3 carbon atoms in the alkyl group, carboxyethyl acrylate, and mixtures thereof. N,N-dimethyl acrylamide and isobornyl acrylate are preferable as the second monomer. If a basic monomer such as substituted (meth)acrylamide or the like is used as the second monomer, a weakly basic tertiary amine compound or the like is preferably used.

The mass ratio between the first monomer and second monomer (first monomer/second monomer) is preferably 50 to 100 / 0 to 50 from the perspective of balance between initial adhesive force at low temperatures and static shear strength at high temperatures.

The amount of the pressure sensitive adhesive acrylic polymer may be 50 mass% or higher, 70 mass% or higher, or 90 mass% or higher based on the total amount of the pressure sensitive adhesive layer 2 for example.

The pressure sensitive adhesive layer 2 further contains inorganic fine particles from the perspective of enabling suitable reinforcement of an adherend. The inorganic fine particles may be silica fine particles or fine particles of a mineral, for example. The inorganic fine particles may either be solid fine particles or hollow fine particles.

The inorganic fine particles preferably contain first inorganic fine particles having a particle size (median diameter, same hereinafter) that is preferably 1 to 500 µm, more preferably 5 to 300 µm, and even more preferably 10 to 100 µm, from the perspective of a reinforcing effect of the pressure sensitive adhesive article.

The amount of the first inorganic fine particles is preferably 0.1 to 20 mass parts, more preferably 1 to 18 mass parts, and even more preferably 3 to 15 mass parts, from the perspective of the reinforcing effect of the pressure sensitive adhesive article.

The inorganic fine particles preferably further include second inorganic fine particles having a particle size of 1 to 100 nm, from the perspective of enabling suitable reinforcement of an adherend and ensuring dispersibility of the first inorganic fine particles in the pressure sensitive adhesive layer 2. In this case, the mass ratio between the first inorganic fine particles and second inorganic fine particles (first inorganic fine particles/second inorganic fine particles) may be 50/50 to 100/0, for example.

Preferred examples of the first inorganic fine particles include K15 manufactured by 3M Company and Microsphere M-600 manufactured by Matsumoto Yushi Co., Ltd. Preferred examples of the second inorganic fine particles include A-200 and R-972 manufactured by Nippon Aerosil Co., Ltd.

The pressure sensitive adhesive layer 2 further contains a chlorinated polyolefin. In this case, even if the pressure sensitive adhesive article 1 does not have a primer layer, a favorable adhesive force is exhibited on an adherend formed from a polyolefin or the like. The chlorinated polyolefin is a compound where a chlorine atom is added to a carbon atom of s polyolefin. Examples of the chlorinated polyolefin include compounds where a copolymer of propylene and an α-olefin such as ethylene, 1-butene, 1-pentene, 1-hexene, 1-heptene, 1-octene, 4-methyl-1-pentene, and the like are chlorinated. The chlorinated polyolefin may also be a compound where the aforementioned copolymer is further graft polymerized by α, β-unsaturated carboxylic acid such as maleic acid, maleic anhydride, fumaric acid, citraconic acid, citraconic anhydride, mesaconic acid, itaconic acid, itaconic anhydride, aconitic acid, aconitic anhydride, himic anhydride, or the like, and then this copolymer is chlorinated.

The heat of melting of the chlorinated polyolefin is preferably 0 to 5 J/g, more preferably 0 to 3 J/g, and even more preferably 0 to 2 J/g from the perspective of compatibility with the pressure sensitive adhesive acrylic polymer. Note that "the heat of melting" refers to the heat of melting as measured by a differential scanning calorimetry (DSC) in accordance with JIS K7121-1987. Specifically, in order to eliminate thermal history, the heat of melting is measured while the temperature is increased from 23°C to 180°C at 10°C/min, the temperature is reduced from 180°C to -100°C at 10°C/min, and the temperature is increased from -100°C to 180°C at 10°C/min in a nitrogen atmosphere.

The amount of chlorine in the chlorinated polyolefin is preferably 16 to 25 mass%, more preferably 17 to 24 mass%, and even more preferably 17 to 23 mass%, from the perspective of adhesive force on the adherend formed from a polyolefin or the like. Note that the amount of chlorine in the chlorinated polyolefin can be measured by an oxygen flask combustion method (in accordance with JIS K 7229-1995) for example.

The chlorinated polyolefin can be manufactured using a method described in Japanese Unexamined Patent Application 2004-217807. For example, for a copolymer of propylene and an α-olefin, the aforementioned heat of melting and chlorine content can be adjusted by appropriately adjusting the ratio between the propylene and the α-olefin and the amount of added chlorine. The chlorinated polyolefin is available as Superchlon 930S and Superchlon 3221S manufactured by Nippon Paper Industries Co., Ltd., for example.

The amount of the chlorinated polyolefin is preferably 0.05 to 5.0 mass parts, more preferably 0.1 to 3.0 mass parts, and even more preferably 0.1 to 1.0 mass parts, with regard to 100 mass parts of the pressure sensitive adhesive acrylic polymer, from the perspective of adhesive force on an adherend formed from a polyolefin or the like.

The pressure sensitive adhesive layer 2 may further contain a tackifier. Examples of the tackifier include hydrocarbon resins, terpene phenol resins, rosin resins, rosin ester resins, hydrides thereof, and the like. Preferable examples of available tackifiers include Regalrez^{™} 1085, Regalrez^{™}1094, Regalrez^{™}6108, and Gegalrez^{™}3102 manufactured by Eastman Chemical Japan, Arkon P-140 manufactured by Arakawa Chemical Industries, Ltd., and the like. If the pressure sensitive adhesive layer 2 contains a chlorinated polyolefin, the pressure sensitive adhesive layer 2 preferably also contains a tackifier.

The amount of the tackifier is preferably 10 mass parts or less, and more preferably 5 mass parts or less with regard to 100 mass parts of the pressure sensitive adhesive acrylic polymer. When the amount of the tackifier is within this range, compatibility of the chlorinated polyolefin can be ensured when used with a chlorinated polyolefin, and a favorable adhesive force can be achieved. The amount of the tackifier may be 0.5 mass parts or higher with regard to 100 mass parts of the pressure sensitive adhesive acrylic polymer, for example.

The pressure sensitive adhesive layer 2 may further contain a conventionally known additive and the like used in a pressure sensitive adhesive, such as a polymerization initiator, cross-linking agent, plasticizer, filler, anti-aging agent, ultraviolet absorber, pigment, and the like, in addition to the aforementioned components.

The thickness of the pressure sensitive adhesive layer 2 (thickness including the fibrous sheet 3) may be 50 to 300 µm, 70 to 1000 µm, 100 to 600 µm, or 200 to 400 µm, for example.

The fibrous sheet 3 is formed from a plurality of mutually intersected fibers 3a. Specifically, in the fibrous sheet 3, the plurality of fibers 3a are mutually intersected in a condition oriented in two or more directions or at random, and at the intersecting point, the fibers 3a are bonded by at least one of entangling, fusing, or adhering. The fibrous sheet 3 may be a woven material, knitted material, or nonwoven material for example. Woven material/knitted material referred to herein is a multiaxial woven material/knitted material such as a biaxial woven material/knitted material, triaxial woven material/knitted material, or the like where the plurality of fibers are oriented in two or more directions. In the pressure sensitive adhesive article 1 illustrated in FIG. 1 and 2, the fibrous sheet 3 is a biaxial woven material where the plurality of fibers 3a are mutually woven in a condition oriented in two directions (substantially orthogonal direction).

The fibers 3a may either be a monofilament or multifilament. The fibers 3a may be formed from glass, carbon, or resin for example, and are preferably formed from glass, from the perspective of tensile elasticity. The thickness of the fibers 3a may be 10 to 100 tex, 20 to 90 tex, or 40 to 80 tex for example.

The fibrous sheet 3 is preferably a biaxial woven material or triaxial woven material, and more preferably a biaxial woven material or triaxial woven material where the fibers 3a are sealed by fusing or adhering, from the perspective of enabling suitable reinforcement of an adherend. The weaving method of the biaxial woven material or triaxial woven material may be plain weaving, twilling, sateen weaving, leno weaving, or mock leno weaving, for example.

The thickness of the fibrous sheet 3 may be 10 to 2000 µm, 20 to 1000 µm, 30 to 500 µm, 50 to 400 µm, or 100 to 300 µm, for example. Furthermore, the density of the fibers 3a in the fibrous sheet 3 is preferably 10 to 100 fibers/25 mm, more preferably 20 to 80 fibers/25 mm, and even more preferably 25 to 70 fibers/25 mm, from the perspective of enabling suitable reinforcement of an adherend. Furthermore, the tensile strength of the fibrous sheet is preferably 500 to 2500 N/25 mm, more preferably 750 to 2500 N/25 mm, and even more preferably 1000 to 2500 N/25 mm.

H201MC107F and H201MC126 manufactured by Unitika Ltd. are preferred examples of the fibrous sheet 3.

The fibrous sheet 3 is provided in the pressure sensitive adhesive layer 2. In other words, the pressure sensitive adhesive layer 2 is present on both main surfaces of the fibrous sheet 3, and both main surfaces of the fibrous sheet 3 are not exposed. Furthermore, as illustrated in FIG. 2, gaps that form between the plurality of fibers 3a forming the fibrous sheet 3 are filled with the pressure sensitive adhesive that form the pressure sensitive adhesive layer 2.

At least one of the thickness (shortest distance) between the main surfaces of the fibrous sheet 3 and both main surfaces of the pressure sensitive adhesive layer 2 is preferably 100 µm or less, more preferably 80 µm or less, and even more preferably 50 µm or less. In this case, an adherend can be suitably reinforced by adhering to the adherend the main surface of the pressure sensitive adhesive layer 2 where the shortest distance between the main surfaces of the fibrous sheet 3 has the aforementioned predetermined value or less.

FIG. 3 is a cross-sectional view illustrating another embodiment of the pressure sensitive adhesive article. As illustrated in FIG. 3, a pressure sensitive adhesive article 11 may further provide a substrate 4 on one surface side of the pressure sensitive adhesive layer 2. The thickness of the substrate 4 may be 1 to 1000 µm, 5 to 500 µm, or 10 to 100 µm for example.

The substrate 4 may be a film, a sheet containing a foam material, nonwoven material, or the like, for example. The film may be a polyethylene film, polypropylene film, polyester film, polycarbonate film, polyvinyl chloride film, polyvinylidene chloride film, polystyrene film, polyamide film, or the like, for example. The sheet containing a foam material may be an acrylic foam material sheet, polyethylene foam material sheet, chloroprene foam material sheet, urethane foam material sheet, or the like, for example. The sheet containing a foam material may be a sheet where the sheet itself has pressure sensitive adhesion. Acrylic foam tape (RT8016 manufactured by 3M Japan Limited) and the like can be purchased as the sheet. The nonwoven material may be a nonwoven material formed from heat resistant fibers such as polyethylene terephthalate (PET) and other polyesters, high density polyethylene, polypropylene, and other polyolefins, nylon, polyvinyl alcohol, polyacrylonitrile, cotton, linen, and other cellulosic pulp natural fibers, rayon, heat resistant synthetic fibers, polyamide fibers, glass fibers, and the like.

The pressure sensitive adhesive article 11 is used by adhering to the adherend the main surface of the pressure sensitive adhesive layer 2 on the opposite side from the substrate 4. The thickness (shortest distance) T1 between the main surface of the fibrous sheet 3 and the main surface of the pressure sensitive adhesive layer 2 on the opposite side from the substrate 4 is preferably 100 µm or less, more preferably 80 µm or less, and even more preferably 50 µm or less, from the perspective of enabling suitable reinforcement of an adherend. The thickness T1 may be 10 µm or more, 20 µm or more, or 30 µm or more for example.

The thickness (shortest distance) T2 between the main surface of the fibrous sheet 3 and the main surface of the pressure sensitive adhesive layer 2 on the substrate 4 side may be 10 to 300 µm in one embodiment, and may be 20 to 100 µm in another embodiment.

The pressure sensitive adhesive article 11 can be manufactured by the following methods, for example.
(1) A first pressure sensitive adhesive layer is formed by coating a pressure sensitive adhesive layer on the substrate 4, for example, and then the first pressure sensitive adhesive layer is cured (thermoset) by radiating ultraviolet light, for example.
(2) The fibrous sheet 3 is placed on the first pressure sensitive adhesive layer.
(3) A second pressure sensitive adhesive layer is formed by coating a pressure sensitive adhesive layer on the fibrous sheet 3, for example, and the second pressure sensitive adhesive layer is cured (thermoset) by radiating ultraviolet light, for example.
Thereby, the pressure sensitive adhesive article 11 is obtained.

Note that a pressure sensitive adhesive article 1 (FIG. 1 and 2) that does not have a substrate is obtained by removing the substrate 4 from the pressure sensitive article 11 obtained in the aforementioned manner for example.

The pressure sensitive adhesive article may have a form other than the aforementioned embodiment. The pressure sensitive adhesive article may have a substrate on both main surfaces of the pressure sensitive adhesive layer, for example. The pressure sensitive adhesive article may have a primer layer on one or both surfaces of the pressure sensitive adhesive layer 2, for example. If the pressure sensitive adhesive article has a substrate and a primer layer, the pressure sensitive adhesive article is configured by laminating the pressure sensitive adhesive layer (including the fibrous sheet), primer layer, and substrate in this order, for example. The pressure sensitive adhesive article may have a liner on one or both surfaces of the pressure sensitive adhesive layer, for example. If the pressure sensitive adhesive article has a liner and a substrate or primer layer, the liner may be provided on the substrate or primer layer.

The pressure sensitive adhesive article described above is suitable for reinforcing a vehicular member such as a bumper or other exterior vehicular member, or door trim or other interior vehicular member, and when the pressure sensitive adhesive article is adhered to the vehicular member, the vehicular member can be suitably reinforced. In other words, one embodiment of the present invention can be said to be a method of adhering the pressure sensitive adhesive article to a vehicular member to reinforce the vehicular member.

### EXAMPLES

Hereinafter, the present invention is described in further detail based on examples, but the present invention is not restricted to the following examples.

### Example 1

72 weight parts of 2-ethylhexyl acrylate, 4 weight parts of N,N-dimethyl acrylamide, 24 weight parts of isobornyl acrylate, 0.04 weight parts of 1,6-hexanediol dimethacrylate, and 0.04 weight parts of photopolymerization initiator (Irgacure 651, BASF Japan) were mixed. The obtained mixture was irradiated with 0.5 mW/cm² of ultraviolet light, and irradiation was finished when the viscosity of the mixture reached 1000 cps. The mixture after irradiated with ultraviolet light was added to 1.8 weight parts of acrylic acid, 2 weight parts of N,N-dimethyl acrylamide, 0.4 weight parts of chlorinated polyolefin (supercron 930S, Nippon Paper Industries Co., Ltd.), 2 weight parts of tackifier (Arkon P=140, Arakawa Chemical Industries, Ltd.), photopolymerization initiator (Irgacure 651), 1.5 weight parts of silica fine particles (A200, Nippon Aerosil Co., Ltd.), and 6 weight parts of glass hollow fine particles (K15, 3M Company) and stirred, then cooled to 23°C to obtain a pressure sensitive adhesive.

Next, an article was obtained by providing on a PET substrate a pressure sensitive adhesive layer made from the pressure sensitive adhesive and a glass cloth (two-axis fabric, H201MC107F, Unitika Ltd., thickness of 180 µm, mass of 200g/m², tensile strength (vertical) 1850 N/25mm (horizontal) 1450 N/25mm) provided in the pressure sensitive adhesive layer (thickness of 38 µm).

Another PET film was provided on the pressure sensitive adhesive layer side of the article. Then, article was irradiated with 0.5 mW/cm² (total energy: 1J) of ultraviolet light to obtain a pressure sensitive adhesive article. The thickness of the pressure sensitive adhesive layer of the obtained article was 300 µm.

### Comparative Example 1

A pressure sensitive adhesive article was manufactured in the same manner as example 1, except that silica fine particles and glass hollow fine particles were not used.

### Comparative Example 2

Scotch (registered trademark) filament tape No. 898 was used as the pressure sensitive adhesive article. Note that the filament tape is made by forming a rubber pressure sensitive adhesive layer on a substrate where a polypropylene film is reinforced by glass fibers arranged in one direction.

### Reference Example 1

A pressure sensitive adhesive article was manufactured in the same manner as example 1, except that glass cloth was not used.

### Reference Example 2

A pressure sensitive adhesive article was manufactured in the same manner as example 1, except that silica fine particles, glass hollow fine particles, and glass cloth were not used.

The following rigidity evaluation test was performed on the aforementioned pressure sensitive adhesive articles.

### Rigidity evaluation test

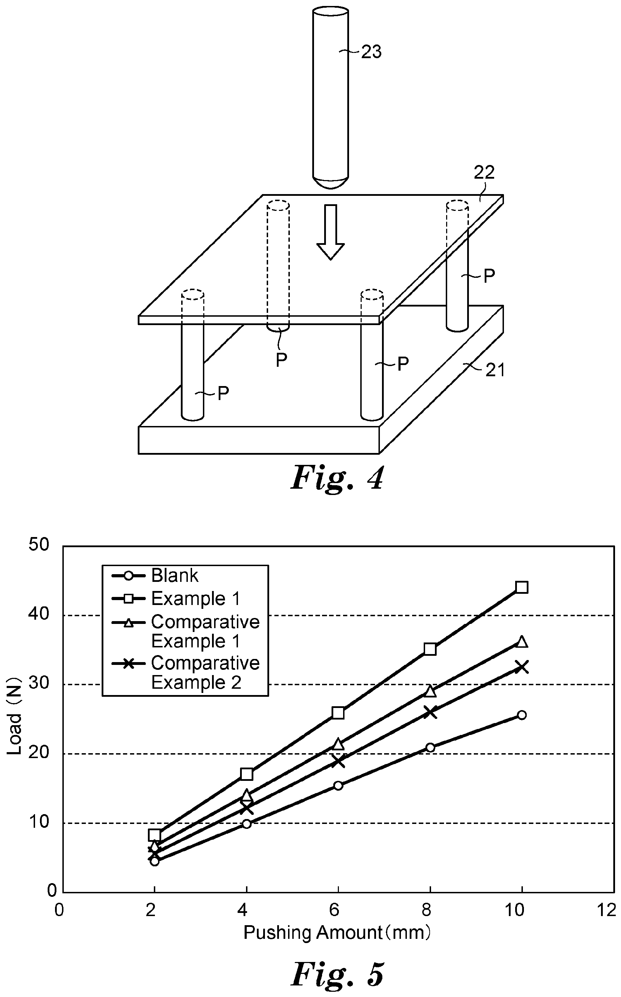

As illustrated in FIG. 4, a resin sheet 22 (size: 150 mm × 150 mm) was placed on a receiving jig 21 with four standing pins P (distance between pins: 140 mm), and a pushing jig 23 with a diameter of φ12 mm was pushed from above in the direction of the arrow at a rate of 50 mm / minute. The rigidity was evaluated by measuring the load (N) at a predetermined pushing amount (mm). Note that a measurement was also performed for the case with only the resin sheet 22 as a blank, and when evaluating the pressure sensitive adhesive articles, the pressure sensitive adhesive articles were bonded to the resin sheet 22 to perform the measurement. The results are shown in Table 1. Note that rigidity is higher if the load is high (in other words, the adherend is reinforced to be stronger). Furthermore, the results for the blank, example 1, and comparative examples 1 and 2 are also shown in FIG. 5.

**Table 1**

| | | Pushing amount (mm) | | | | |
|---|---|---|---|---|---|---|
| | | 2 | 4 | 6 | 8 | 10 |
| Load (N) | Blank | 4.5 | 9.9 | 15.4 | 20.9 | 25.6 |
| | Example 1 | 8.3 | 17.1 | 25.9 | 35.1 | 44.1 |
| | Comparative Example 1 | 6.7 | 14.1 | 21.5 | 29.1 | 36.2 |
| | Comparative Example 2 | 5.7 | 12.2 | 19.0 | 26.1 | 32.6 |
| | Reference Example 1 | 4.6 | 9.9 | 15.1 | 20.9 | 25.7 |
| | Reference Example 2 | 45 | 9.9 | 15.4 | 20.9 | 25.6 |

Furthermore, the following heat resistance evaluation test was performed on the pressure sensitive adhesive article of example 1 and comparative example 2.

### Heat resistance evaluation test

The pressure sensitive adhesive layer of the pressure sensitive adhesive article was attached to a polypropylene substrate at room temperature (23°C). At this time, a 2 kg metal roller was moved forward and backward once. A sample thus achieved was stored under the following 5 conditions.
20 min, RT: at 23°C for 20 minutes
24 h, RT: at 23°C for 24 hours
24 h, 80°C: at 80°C at 24 hours
2W, 80°C: at 80°C for 2 weeks
4W, 80°C: at 80°C for 4 weeks

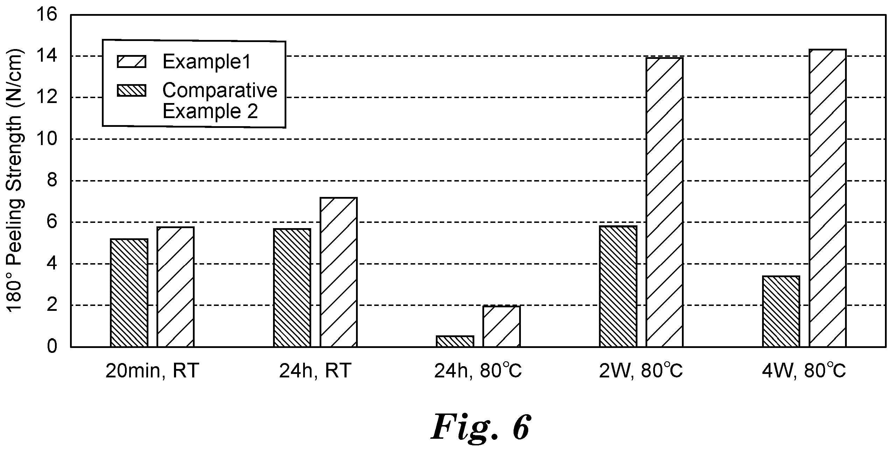

The sample after storing was placed in a tensile testing machine, the pressure sensitive adhesive article was peeled from the substrate in a direction of 180° at a rate of 50 mm/minute, and the peeling strength at the time was measured. Note that the sample stored at 80°C was cooled to room temperature before testing. The results are shown in FIG 6.

## Claims

1. A pressure sensitive adhesive article, comprising:
a pressure sensitive adhesive layer containing a pressure sensitive acrylic polymer, a chlorinated polyolefin and inorganic fine particles; and
a fibrous sheet having opposite main surfaces and formed by a plurality of mutually intersected fibers that are arranged in the pressure sensitive adhesive layer so the pressure sensitive adhesive layer is present on both main surfaces of the fibrous sheet and both main surfaces of the fibrous sheet are not exposed.

2. The pressure sensitive adhesive article according to claim 1 , wherein the inorganic fine particles include hollow fine particles.

3. The pressure sensitive adhesive article according to any one of claims 1 or 2, wherein the thickness of the fibers is in the range of from 10 to 100 tex.

4. The pressure sensitive adhesive article according to any one of claims 1 to 3,
wherein the density of the fibers in the fibrous sheet is in the range of from 10 to 100 fibers/25 mm.

5. The pressure sensitive adhesive article according to any one of claims 1 to 4, further comprising:
a substrate on one surface side of the pressure sensitive adhesive layer, with the thickness of the substrate being in the range of from 1 to 1000 µm, and the shortest distance between the main surface of the fibrous sheet and the main surface of the pressure sensitive adhesive layer on the opposite side from the substrate is at least 100 µm.

6. The pressure sensitive adhesive article according to claim 5, wherein the shortest distance between the main surface of the fibrous sheet and the main surface of the pressure sensitive adhesive layer on the opposite side from the substrate is at least 10 µm.

7. The pressure sensitive adhesive article according to claim 5 or 6, wherein the shortest distance between the main surface of the fibrous sheet and the main surface of the pressure sensitive adhesive layer on the substrate side is in the range of from 10 to 300 µm.

8. The pressure sensitive adhesive article according to any one of claims 1 to 4, wherein the shortest distance between the main surfaces of the fibrous sheet and both main surfaces of the pressure sensitive adhesive layer is 100 µm or less.

9. A vehicular member reinforced with a pressure sensitive adhesive article according to any one of claims 1 to 8.

10. A method of reinforcing a vehicle member, said method comprising:
adhering a pressure sensitive article to a vehicle member to reinforce the vehicle member,
whererin the pressure sensitive adhesive article comprises:
an adhesive layer comprising a pressure sensitive acrylic polymer, a chlorinated polyolefin and inorganic fine particles; and
a fibrous sheet formed by a plurality of mutually intersected fibers that are arranged in the pressure sensitive adhesive layer so the pressure sensitive adhesive layer is present on opposite main surfaces of the fibrous sheet.

11. The method claim 10, said method comprising adhering a pressure sensitive article according to any one of claims 1 to 8, to the vehicle member so as to reinforce the vehicle member.

## Patentansprüche

1. Ein Haftklebstoffgegenstand, umfassend:
eine Haftklebstoffschicht, die ein selbsthaftendes Acrylpolymer, ein chloriertes Polyolefin und anorganische feine Teilchen enthält; und
eine Faserbahn, die gegenüberliegende Hauptoberflächen aufweist und durch eine Mehrzahl von miteinander überkreuzten Fasern gebildet ist, die in der Haftklebstoffschicht angeordnet sind, sodass die Haftklebstoffschicht auf beiden Hauptoberflächen der Faserbahn vorhanden ist und beide Hauptoberflächen der Faserbahn nicht freigelegt sind.

2. Der Haftklebstoffgegenstand nach Anspruch 1, wobei die anorganischen feinen Teilchen hohle feine Teilchen einschließen.

3. Der Haftklebstoffgegenstand nach einem der Ansprüche 1 oder 2,
wobei die Dicke der Fasern in dem Bereich von 10 bis 100 tex liegt.

4. Der Haftklebstoffgegenstand nach einem der Ansprüche 1 bis 3,
wobei die Dichte der Fasern in der Faserbahn in dem Bereich von 10 bis 100 Fasern/25 mm liegt.

5. Der Haftklebstoffgegenstand nach einem der Ansprüche 1 bis 4, ferner umfassend:
ein Substrat auf einer Oberflächenseite der Haftklebstoffschicht, wobei die Dicke des Substrats in dem Bereich von 1 bis 1000 µm liegt und der kürzeste Abstand zwischen der Hauptoberfläche der Faserbahn und der Hauptoberfläche der Haftklebstoffschicht auf der gegenüberliegenden Seite von dem Substrat mindestens 100 µm beträgt.

6. Der Haftklebstoffgegenstand nach Anspruch 5, wobei der kürzeste Abstand zwischen der Hauptoberfläche der Faserbahn und der Hauptoberfläche der Haftklebstoffschicht auf der gegenüberliegenden Seite von dem Substrat mindestens 10 µm beträgt.

7. Der Haftklebstoffgegenstand nach Anspruch 5 oder 6, wobei der kürzeste Abstand zwischen der Hauptoberfläche der Faserbahn und der Hauptoberfläche der Haftklebstoffschicht auf der Substratseite in dem Bereich von 10 bis 300 µm liegt.

8. Der Haftklebstoffgegenstand nach einem der Ansprüche 1 bis 4,
wobei der kürzeste Abstand zwischen den Hauptoberflächen der Faserbahn und beiden Hauptoberflächen der Haftklebstoffschicht 100 µm oder weniger beträgt.

9. Ein Element für Fahrzeuge, das mit einem Haftklebstoffgegenstand nach einem der Ansprüche 1 bis 8 verstärkt ist.

10. Ein Verfahren zum Verstärken eines Fahrzeugelements, das Verfahren umfassend:
Kleben eines selbsthaftenden Gegenstands auf ein Fahrzeugelement, um das Fahrzeugelement zu verstärken,
wobei der Haftklebstoffgegenstand umfasst:
eine Kleberschicht, umfassend ein selbsthaftendes Acrylpolymer, ein chloriertes Polyolefin und anorganische feine Teilchen; und
eine Faserbahn, die durch eine Mehrzahl von miteinander überkreuzten Fasern gebildet ist, die in der Haftklebstoffschicht angeordnet sind, sodass die Haftklebstoffschicht auf gegenüberliegenden Hauptoberflächen der Faserbahn vorhanden ist.

11. Das Verfahren nach Anspruch 10, das Verfahren umfassend das Kleben eines selbsthaftenden Gegenstands nach einem der Ansprüche 1 bis 8 auf das Fahrzeugelement, um das Fahrzeugelement zu verstärken.

## Revendications

1. Article adhésif sensible à la pression, comprenant :
une couche d'adhésif sensible à la pression contenant un polymère acrylique sensible à la pression, une polyoléfine chlorée et des particules fines inorganiques ; et
une feuille fibreuse ayant des surfaces principales opposées et formée par une pluralité de fibres se croisant mutuellement qui sont agencées dans la couche d'adhésif sensible à la pression de sorte que la couche d'adhésif sensible à la pression est présente sur l'une et l'autre des surfaces principales de la feuille fibreuse et ni l'une ni l'autre des surfaces principales de la feuille fibreuse ne sont exposées.

2. Article adhésif sensible à la pression selon la revendication 1, dans lequel les particules fines inorganiques comportent des particules fines creuses.

3. Article adhésif sensible à la pression selon l'une quelconque des revendications 1 ou 2,
dans lequel l'épaisseur des fibres est dans la plage allant de 10 à 100 tex.

4. Article adhésif sensible à la pression selon l'une quelconque des revendications 1 à 3,
dans lequel la densité des fibres dans la feuille fibreuse est dans la plage allant de 10 à 100 fibres/25 mm.

5. Article adhésif sensible à la pression selon l'une quelconque des revendications 1 à 4, comprenant en outre :
un substrat sur un côté de surface de la couche d'adhésif sensible à la pression, avec l'épaisseur du substrat étant dans la plage allant de 1 à 1000 µm, et la distance la plus courte entre la surface principale de la feuille fibreuse et la surface principale de la couche d'adhésif sensible à la pression sur le côté opposé au substrat est d'au moins 100 µm.

6. Article adhésif sensible à la pression selon la revendication 5, dans lequel la distance la plus courte entre la surface principale de la feuille fibreuse et la surface principale de la couche d'adhésif sensible à la pression sur le côté opposé au substrat est d'au moins 10 µm.

7. Article adhésif sensible à la pression selon la revendication 5 ou 6, dans lequel la distance la plus courte entre la surface principale de la feuille fibreuse et la surface principale de la couche d'adhésif sensible à la pression sur le côté substrat est dans la plage allant de 10 à 300 µm.

8. Article adhésif sensible à la pression selon l'une quelconque des revendications 1 à 4,
dans lequel la distance la plus courte entre les surfaces principales de la feuille fibreuse et l'une et l'autre des surfaces principales de la couche d'adhésif sensible à la pression est de 100 µm ou moins.

9. Élément de véhicule renforcé avec un article adhésif sensible à la pression selon l'une quelconque des revendications 1 à 8.

10. Procédé de renforcement d'un élément de véhicule, ledit procédé comprenant :
l'adhésion d'un article sensible à la pression à un élément de véhicule pour renforcer l'élément de véhicule,
dans lequel l'article adhésif sensible à la pression comprend :
une couche adhésive comprenant un polymère acrylique sensible à la pression, une polyoléfine chlorée et des particules fines inorganiques ; et
une feuille fibreuse formée par une pluralité de fibres se croisant mutuellement qui sont agencées dans la couche d'adhésif sensible à la pression de sorte que la couche d'adhésif sensible à la pression est présente dans des surfaces principales opposées de la feuille fibreuse.

11. Procédé revendication 10, ledit procédé comprenant l'adhésion d'un article sensible à la pression selon l'une quelconque des revendications 1 à 8, à l'élément de véhicule de façon à renforcer l'élément de véhicule.
